# EUROPÄISCHE PATENTSCHRIFT

(11) **EP 4 617 743 B1**
(45) Veröffentlichungstag und Bekanntmachung des Hinweises auf die Patenterteilung: **09.12.2026**
(21) Anmeldenummer: 24163497.1
(22) Anmeldetag: 14.03.2024
(51) Int. Cl.: G02B 6/44, G02B 6/38

(54) **ANSCHLUSSBOX**
CONNECTION BOX
BOÎTE DE RACCORDEMENT

(43) Veröffentlichungstag der Anmeldung: 17.09.2025
(73) Patentinhaber: Hauff-Technik GRIDCOM GmbH, 73494 Rosenberg (DE)
(72) Erfinder: Krause, David, 86150 Augsburg (DE); Laumer, Peter, 82131 Gauting (DE); Mayr, Martin, 82395 Untersöchering (DE); Bäuerle, Manfred, 73492 Rainau-Saverwang (DE); Himmelsbach, Daniel, 70192 Stuttgart (DE)
(74) Vertreter: Szynka Smorodin Patentanwälte Partnerschaft mbB

(56) Entgegenhaltungen:
- EP-B1- 2 646 866
- WO-A1-2021/087278
- CN-A- 110 346 888
- US-A- 5 115 586
- US-A1- 20230 116 032

## Beschreibung

Die Erfindung betrifft eine Glasfaser-Anschlussbox und ein Verfahren zur Individualisierung einer solchen Anschlussbox.

Glasfasern (oder "Lichtwellenleiter") sind fortschrittliche Signalträger und in zunehmendem praktischem Einsatz. Insbesondere werden mehr und mehr Gebäude mit Glasfaseranschlüssen zur Datenübertragung versehen. Dabei kommen Kabelstränge mit einer größeren Zahl einzelner, jeweils ummantelter Glasfaserleitungen an, wobei die ummantelten Einzelleitungen im Folgenden als Kabel bezeichnet werden. Der Kabelstrang (in diesem Sinn mit einer Anzahl Kabel darin) ist einerseits ebenfalls ummantelt und natürlich können z. B. bei der Erdverlegung auch viele solche Kabelstränge zu noch stärkeren Leitungen zusammengefasst sein, die ihrerseits im Alltag auch oft als Kabel bezeichnet werden, im Folgenden aber nicht gemeint sind.

Wenn "Abnehmer", also Geräte und Anschlüsse für Geräte in Büros, Wohnungen, Produktionsflächen und dergleichen, mit einem Glasfasernetz verbunden werden, wird typischerweise ein Gebäudeanschluss erstellt, möglicherweise auch ein Anschluss für einen Gebäudeteil, je nach Anschlusszahl und Dimensionen. Hier sind Glasfaser-Anschlussboxen gebräuchlich, in denen einzelne Kabel aus einem Kabelstrang individuell angeschlossen werden, sei es für neue Anschlüsse oder auch zur Änderung bestehender Anschlüsse.

Grundsätzlich sind dabei Steckverbindungen und im Vergleich eher auf Dauer angelegte Spleißstellen im Einsatz. Für Steckverbindungen sind Aufnahmen gebräuchlich, die im Folgenden als Kupplungen bezeichnet werden. In eine solche Kupplung können miteinander zu verbindende Steckelemente eingeführt werden, werden darin gehalten und stellen damit den Anschluss der jeweiligen Kabel aneinander sicher. Man spricht auch von Patchstellen. Spleißstellen sind vergleichsweise empfindlich und werden in der Regel durch eine Spleißschutzvorrichtung umfasst und damit gehalten und geschützt, mit welcher Spleißschutzvorrichtung sie in eigens hierfür vorgesehenen Ablagen, also Plätzen zur Fixierung, abgelegt werden können. Oft werden aus dem Kabelstrang eingehende Kabel über eine solche Spleißstelle an sogenannte Pigtail-Kabel angeschlossen, die nur innerhalb der Anschlussbox verlaufen und an ihrem der Spleißstelle entgegengesetzten Ende ein Einsteckelement für eine Patchstelle aufweisen.

Gerade bei Gebäudeanschlüssen werden für eine gewisse Zahl solcher einzelner Verbindungsstellen Anschlussboxen mit einem Gehäuse benutzt, welches typischerweise einen Deckel und ein Unterteil aufweist und typischerweise für eine Wandmontage an einer vertikalen Wand vorgesehen ist. Solche Anschlussboxen bestehen typischerweise aus Kunststoff, insbesondere aus Spritzgussteilen. Davon zu unterscheiden sind Verteilerschränke, insbesondere aus Metall, oft mit Glastüren, in denen viel größere Zahlen von Anschlüssen in Stapeln von übereinander oder nebeneinander liegenden Modulen untergebracht sind. Mit einer Anschlussbox ist im Folgenden weder ein solcher Verteilerschrank noch das Gehäuse eines Modulstapels oder eines Moduls darin gemeint, sondern eine eigenständige Anschlussbox mit einer maximalen Anschlusszahl von vorzugsweise bis höchstens 288 Patchstellen und/oder für bis zu höchstens 576 Spleißstellen (bezogen auf die angeschlossene Zahl von Einzelfasern). Verteilerschränke sind deutlich größer. Kleinere Anschlussboxen sind natürlich auch gemeint.

Das Gehäuse einer solchen Anschlussbox dient primär dem Schutz vor mechanischen Beeinträchtigungen, etwa unbefugtem Zugriff oder unbeabsichtigten Beschädigungen, dem Schutz vor Schmutz, insbesondere Staub, und in vielen Fällen auch einem gewissen Feuchtigkeitsschutz, z. B. gegen Spritzwasser, jedenfalls im montierten Zustand.

Solche Anschlussboxen werden von spezialisierten Herstellern in verschiedenen Varianten angeboten und sind dabei mit verschiedenen Einbauteilen ausgestattet. Diese sind ausgelegt zum Halten, Führen, geordneten Ablegen von Überlängen von Kabeln und auch zum organisierten Halten von Spleißstellen, Kupplungen und gegebenenfalls weiteren Elementen wie Splittern, Filtern, Weichen etc. Der Anwender bzw. Kunde wählt eine ihm geeignet erscheinende Anschlussbox aus, wobei er möglicherweise nicht alle montierten Einbauteilen nutzt und ein Teil davon für eventuelle zukünftige Nutzungen verbleibt.

Zum Stand der Technik wird verwiesen auf die EP 2 646 866 B1, die dem Oberbegriff des Anspruchs 1 zugrunde liegt. Dort ist eine Anschlussbox mit einem Einbauteile-Satz gezeigt, der Kupplungen 281 und Kupplungshalter 280, 480 als Einbauteile umfasst, die wahlweise in einem Gehäuse der Anschlussbox befestigbar sind.

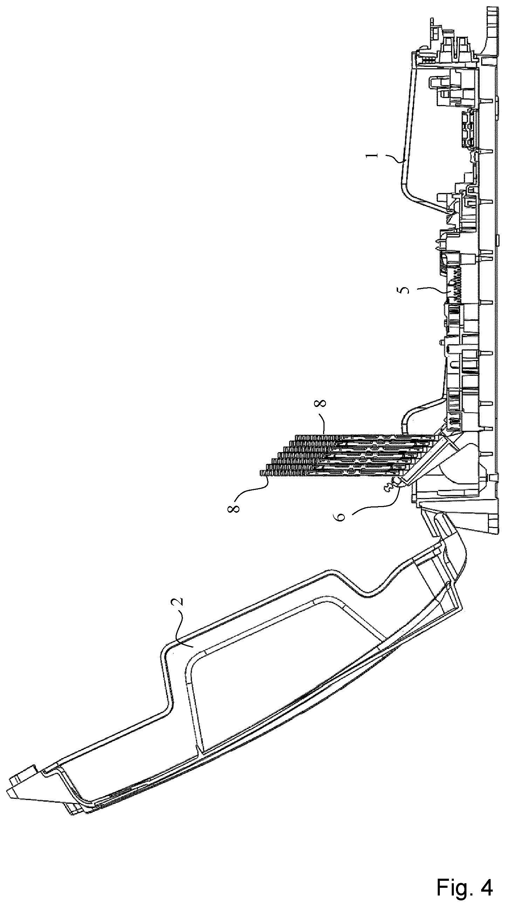

Zum Stand der Technik wird außerdem verwiesen auf die US 5 115 586 A, die aufklipsbare Marker für elektrische oder optische Kabel oder Zündkabel für Verbrennungsmotoren darstellt, welche aus elastomeren Außenhüllen mit einer gelenkigen Verbindung zwischen Halbschalen bestehen und durch Zusammenfügen der Halbschalen montiert werde können. Dabei zeigt Figur 4 eine Mehrzahl solcher Marker in einem Spritzgussrohling kombiniert.

Außerdem gehören zum Stand der Technik die US 2023/116032 A1 und die CN 110 346 888 A.

Auf dieser Grundlage liegt der Erfindung die Aufgabe zugrunde, eine vorteilhafte Anschlussbox und ein vorteilhaftes Verfahren zur Individualisierung der Anschlussbox vorzuschlagen.

Erfindungsgemäß wird diese Aufgabe gelöst durch eine Glasfaser-Anschlussbox nach Anspruch 1. Konkret geht es um eine Anschlussbox mit einem Gehäuse und einem Einbauteile-Satz nicht montierter Einbauteile für die Anschlussbox, welcher Satz Kupplungseinrichtungen, nämlich Kupplungen oder Kupplungshalter, als Einbauteile umfasst, wobei die Kupplungseinrichtungen aus dem Satz nach Zahl und Position wahlweise in dem Gehäuse befestigbar sind, sowie durch ein Verfahren zur Individualisierung einer Glasfaser-Anschlussbox, bei welchem eine solche Anschlussbox als eine in einer Mehrzahl identischer Anschlussboxen bevorratet wird und danach durch Auswahl von Einbauteilen aus dem Einbauteile-Satz der Anschlussbox und Montage dieser ausgewählten Einbauteile in dem Gehäuse individualisiert wird.

Ein wichtiger Gedanke der Erfindung besteht darin, eine Anschlussbox mit einem Satz noch nicht montierter Einbauteile auszustatten und damit die Individualisierung oder einen großen Teil der Individualisierung dem Anwender oder Kunden zu überlassen. Insbesondere soll der Einbauteile-Satz mindestens Kupplungseinrichtungen als Einbauteile umfassen (im obigen Sinn als Aufnahmen für Steckelemente) und sollen die Kupplungseinrichtungen aus dem Satz nach Zahl und Position wahlweise in dem Gehäuse befestigbar sein. "Kupplungseinrichtungen" sind hier Halter für Kupplungen oder Kupplungen (oder beides zusammen). Die Kupplungen können für sich oder mittels Kupplungshaltern in der Einbaubox montiert werden, wobei die Kupplungshalter im Wesentlichen aus einem Rahmen zur (evtl. späteren) Aufnahme einer Kupplung und Füßen oder anderen Befestigungselementen bestehen können. Die Kupplungen selbst sind dann in oder an den Kupplungshaltern befestigt oder befestigbar und bilden für sich betrachtet grob vereinfacht gesagt Rohrabschnitte mit typischerweise rechteckigem Querschnitt zur Aufnahme von Steckverbindungselementen. Damit kann der Anwender seine Anschlussbox individuell ausstatten und mehr oder weniger Kupplungseinrichtungen für mehr oder weniger Patchstellen montieren und/oder aus einer größeren Auswahl nur bestimmte Plätze für die Montage der Kupplungen nutzen.

Der Hersteller produziert also untereinander identische Anschlussboxen und untereinander identische Einbauteile-Sätze und bevorratet diese in dieser Form. Die einzelnen Einbauteile, insbesondere Kupplungseinrichtungen, werden vom Anwender aus dem Einbauteile-Satz ausgewählt und individuell in dem Gehäuse befestigt. Dies geschieht dementsprechend vorzugsweise nach dem Transport vom Hersteller zum Kunden, wobei vorzugsweise der Kunde seinerseits eine Mehrzahl untereinander identischer Anschlussboxen und Einbauteile-Sätze erwirbt und vorzugsweise auch zunächst in dieser Form bevorratet. Er kann dann anwendungsspezifisch die Individualisierung vornehmen.

Die Kupplungen können in verschiedenen Ausgestaltungen vorgesehen und montierbar sein, insbesondere als Einzelkupplungen, Duplexkupplungen (für zwei typischerweise nebeneinanderliegende steckbare Kabelverbindungen), als mehrstöckige Kupplungen mit mindestens zwei Aufnahmen übereinander oder mit einer Mehrzahl Aufnahmen in einer Reihe nebeneinander oder (kombiniert daraus) als Matrix.

Richtungsangaben beziehen sich übrigens auf die Situation bei der Individualisierung/Bestückung mit Einbauteilen, in der typischerweise ein Gehäuseunterteil unten und ein Deckel oben liegt. Eine typische Wandmontageposition kann davon abweichen, in dem dann das Gehäuseunterteil an der vertikalen Wand befestigt ist.

Außerdem sieht die Erfindung vor, dass der Einbauteile-Satz als ein einstückiges Kombinationsteil vorgesehen ist, in dem eine Mehrzahl Einbauteile zusammenhängen. Die Einbauteile können dann aus dem Kombinationsteil abgetrennt werden, z. B. abgebrochen oder abgeschnitten werden, wenn sie montiert werden sollen. Sie sind aber bis zu diesem Zeitpunkt verliersicher und übersichtlich gehalten. Außerdem lässt sich ein solches Kombinationsteil z. B. mit Spritzguss besonders günstig herstellen. Das Kombinationsteil kann dabei z. B. einen Rahmen aufweisen, innerhalb dessen eine im Wesentlichen zweidimensionale Anordnung von Einbauteilen mit dünnen Übergangsstellen zum Abtrennen vorgesehen ist, vergleiche das Ausführungsbeispiel. Ein solches Kombinationsteil kann einem Einbauteilegitter ähneln.

Vorzugsweise ist die Zahl der integrierten Kombinationsteile klein, besonders bevorzugt höchstens zwei und im günstigsten Fall genau eines (natürlich pro Einbaubox). Im Fall einer Mehrzahl von Kombinationsteilen können diese natürlich verschieden sein. Außerdem schließt dieser Aspekt der Erfindung nicht aus, dass weitere Einbauteile außerhalb des Kombinationsteils vorgesehen sind, wie im Folgenden noch für einige besondere Fälle erläutert wird.

Bei einer besonders bevorzugten Ausgestaltung ist die Anschlussbox mit dem Einbauteile-Satz so ausgelegt, dass die Kupplungseinrichtungen wahlweise in verschiedenen Leitungsrichtungen (bezogen auf die später zu montierenden Steckverbinder und die lokale Leitungsrichtung darin) befestigbar sind. Das kann insbesondere die Auswahl zwischen Montagepositionen für vorzugsweise genau eine Leitungsrichtung und anderen Montagepositionen für vorzugweise genau eine andere Leitungsrichtung bedeuten; der Fall der Wählbarkeit der Leitungsrichtung bei der Montage an einer bestimmten Position ist aber inbegriffen. Die Wählbarkeit der Leitungsrichtung eröffnet einen wichtigen zusätzlichen Gestaltungsspielraum bei der Individualisierung und Innenaufteilung in der Anschlussbox. Insbesondere kommen Leitungsrichtungen parallel zu den Außenkanten einer Anschlussbox in Betracht, die typischerweise zueinander rechtwinklig sind.

Zumindest ein Teil der Montagepositionen für Kupplungseinrichtungen kann entlang einer Gehäusewand, insbesondere Wand des Gehäuseunterteils, aufgereiht sein, die für Leitungsdurchführungen von außerhalb der Anschlussbox in die Anschlussbox hinein oder umgekehrt vorgesehen ist. Dabei können die Zwischenabstände auf diejenigen zwischen den Leitungsdurchführungen abgestimmt sein. Somit können z. B. innerhalb des Gehäuses liegende Patchstellen günstig kombiniert werden mit Leitungsdurchführungen, wobei letztere dem mechanischen Schutz der Leitungen selbst bezüglich Bruch, Biegeradien, Staubschutz oder dem Feuchtigkeitsschutz dienen können.

Vorteilhafterweise kann das oder können die Kombinationsteile in dem Gehäuse befestigbar sein, bspw. schnappend mit einem anderen Teil des Gehäuses oder in dem Gehäuse verbindbar sein, wobei das Kombinationsteil im befestigten Zustand vorzugsweise drehbar ist. Damit ist es bei Arbeiten nicht oder weniger im Weg. In der befestigten Situation ist das Kombinationsteil selbst unverlierbar und "aufgeräumt". Möglicherweise wird das Kombinationsteil erst nach oder bei der Individualisierung der Anschlussbox darin befestigt, aber nicht in dieser Situation vom Hersteller ausgeliefert (oder bevorratet).

Neben den bereits erwähnten Kupplungseinrichtungen können im Einbauteile-Satz, insbesondere im Kombinationsteil, auch noch andere Elemente enthalten sein, z. B. Klemmteile für Glasfaserkabel oder Gehäusezusatzteile, etwa ein Schlossblech (ein Kunststoff-Hilfselement im Ausführungsbeispiel) für den Fall einer Schlossmontage im Gehäuse beinhalten. Außerdem sind auch gar nicht selbst für den Einbau vorgesehene Hilfsteile möglich, z. B. ein Werkzeug zur vereinfachten Demontage von Steckverbindern in Kupplungen.

Eine weitere Ausgestaltung sieht eine innere Montageplatte in dem Gehäuse vor. Dabei handelt es sich um einen Teil der Anschlussbox, das zusätzliche Flächen für das Führen oder Halten von Kabeln oder Demontage von Einbauteilen zur Verfügung stellt. Vorzugsweise ist diese Montageplatte annähernd so groß wie die Anschlussbox selbst. Bevorzugt deckt sie mindestens 60 %, vorzugsweise 65 %, oder sogar 70 %, des (in der Bestückungsposition in Draufsicht) verfügbaren Flächeninhalts des Innenraums des Gehäuseunterteils ab. Es kann sich insoweit um eine Art inneren Deckel handeln.

Diese Montageplatte kann auf zumindest einer Seite, vorzugsweise auf beiden Seiten je zumindest eine Überlängenablage für Kabel aufweisen. Solche Überlängenablagen sind wegen der Mindestkrümmungsradien der Kabel im Vergleich zu vielen anderen Einrichtungen relativ groß, sodass es günstig sein kann, in anderen Bereichen der Anschlussbox in dieser Form Platz zu schaffen.

Günstiger Weise ist das oben behandelte Kombinationsteil an der Montageplatte befestigbar. Außerdem kann vorgesehen sein, dass die Montageplatte in dem Gehäuse lösbar gehalten ist und das Kombinationsteil anstelle der Montageplatte in dem Gehäuse befestigt werden kann.

Ferner kann die Montageplatte (als innerer Deckel) in einer geschlossenen Klappposition bestimmte Bereiche schützen, vorzugsweise Spleißstellenablagen, und zum Zugriff darauf aufgeklappt werden. Im Sinn der bereits behandelten freien Individualisierbarkeit der Anschlussbox kann die Montageplatte außerdem mindestens einen austrennbaren Bereich aufweisen, sodass der Nutzer zwischen der Verdeckung eines bestimmten Bereichs (in der heruntergeklappten Position der Montageplatte) und dessen Zugänglichkeit wählen kann.

Es kann auch weitere Zubehörteile geben, die, wie zuvor bereits erwähnt, vorzugsweise nicht in dem bevorzugten Kombinationsteil integriert sind. Insbesondere betrifft dies eine nadelartige Manipulationshilfe, die einer Stricknadel oder einem Mikado-Stab ähnelt und beim Umgang mit Kabeln eine pragmatische und effiziente Hilfe sein kann. Eine solche Nadel kann an ein Teil der Anschlussbox angeformt und im Bedarfsfall davon abtrennbar sein. Auch kann es natürlich in der Anschlussbox Befestigungsmöglichkeiten für die (abgetrennte) Nadel geben.

Die Flexibilität der Nutzungsmöglichkeiten und der Individualisierung der Anschlussbox kann weiter erhöht werden durch eine weitere Überlängenablage. Dazu kann unter einem Anschlussbereich eine spezielle Überlangenablage vorgesehen sein. Mit dem Anschlussbereich ist ein Bereich für Kabelanschlüsse mit Spleißstellen und/oder Patchstellen gemeint, also z. B. ein Bereich mit möglichen Montagepositionen für die bereits erwähnten Kupplungseinrichtungen. In einem Bereich darunter, der durch Bewegung eines Innenstrukturteils der Anschlussbox zugänglich oder besser zugänglich wird, kann eine besondere Überlängenablage für relativ dicke Glasfaserkabel mit einer jeweiligen Stärke von mindestens 0,5 mm, vorzugsweise sogar mindestens 0,8 mm, 1,0 mm, 1,2 mm oder 1,5 mm, vorgesehen sein, wobei vorzugsweise von Kabeln mit 0,9 mm mindestens 10, vorzugsweise 20, 30, 40, 50, 60, 70 oder sogar 80 möglich sind. Es ist also relativ viel Platz vorhanden.

Der Anschlussbereich darüber kann bei einer bevorzugten Ausgestaltung (und beim Ausführungsbeispiel) mindestens eine klappbare Spleißkassette enthalten, die in einem Aufnahmeteil klappbar gehalten ist, vorzugsweise einen ganzen Stapel übereinanderliegender Spleißkassetten. Für den erwähnten Zugang zu dem Bereich darunter können diese dann hochgeklappt werden. Die Spleißkassetten enthalten jeweils mindestens eine Spleißstellenablage und vorzugsweise eine jeweilige Überlängenablage für die typischerweise dünnen Einzelfasern, die an den Spleißstellen hängen (und die z. B. 0,2 bis 0,25 mm stark sein können).

Damit besteht eine Auswahl zwischen der erwähnten Überlängenablage für die besonders starken Kabel unter dem Anschlussbereich, den Überlängenablagen an der bereits erwähnten Montageplatte und auch den Überlängenablagen in den Spleißkassetten. Zusätzlich können die (mindestens eine) Spleißkassette(n) lösbar angebracht und insoweit auch weggelassen werden, womit auch ein Volumen über der erwähnten Überlängenablage für die besonders starken Kabel noch für besondere Kabelüberlängen verfügbar wird. Darüber hinaus können der Bodenteil und, vorzugsweise als einstückiger Bestandteil davon, auch ein Aufnahmebereich zur lösbaren Halterung von Spleißkassetten als separate Teile in einem eigentlichen Gehäuse unterteilte Anschlussbox vorliegen und kann ein Zwischenraum innerhalb des Gehäuseunterteils und außerhalb des Bodenteils ebenfalls als Überlängenablage verwendet werden.

Die verfügbare Höhe in dem Bodenteil, also in dem Bereich unter dem Anschlussbereich, kann auch für größere Bauteile wie Filter, Splitter und dergleichen benutzt werden, für die Spleißkassetten möglicherweise zu wenig Bauhöhe bieten. Außerdem können hier nicht genutzte Steckverbindungselemente mit daran hängenden Pigtail-Kabeln auf Vorrat liegen. Die Überlängenablage im Bodenteil kann, um nur ein Beispiel zu nennen, für eine Mehrzahl von Kabeln an einem Splitter benutzt werden. Die zusätzliche Überlängenablage außerhalb des Bodenteils kann z. B. für einen nicht genutzten Rest eines ganzen Strangkabels (mit einer Mehrzahl Bündel mit jeweils einer Mehrzahl Fasern) eingesetzt werden. Wenn nämlich z. B. nur ein Teil der Bündel für Anschlüsse der Anschlussbox in Betracht kommt, kann der nicht genutzte Rest in dieser Weise als Überlänge abgelegt werden, um für die genutzten Bündel genügend Kabellänge verfügbar zu haben.

Diese Überlängenablage ist also insbesondere für besonders dicke (Strang-) Kabel geeignet mit einer Stärke von mindestens 0,8 mm, vorzugsweise mindestens 1 mm, 1,2 mm, 1,4 mm oder sogar mindestens 1,6 mm. Dort ist Platz für vorzugsweise mindestens 10, besonders bevorzugterweise mindestens 20, 30, 40 oder sogar mindestens 50 solche Kabel.

Eine bevorzugte Ausgestaltung der Anschlussbox ist bezüglich einer Mittelebene spiegelsymmetrisch. Das bezieht sich natürlich auf den noch nicht individualisierten Zustand. In diesem Fall kann z. B. abhängig von der Lage eines eingehenden Kabelstrangs, von den gewünschten Verläufen aus der Anschlussbox auslaufender Kabel und abhängig von den Unterbringungsmöglichkeiten für die Anschlussbox selbst bspw. gewählt werden, ob der Kabelstrang in einem linken oder in einem rechten Bereich der Anschlussbox eintritt (und die abgehenden Kabel dann typischerweise auf der jeweils anderen Seite). Durch die Symmetrie der Montagemöglichkeiten innerhalb der Anschlussbox kann diese Entscheidung dann bei der Individualisierung in eine optimale Aufteilung des Innenlebens der Anschlussbox umgesetzt werden.

Im Folgenden wird die Erfindung anhand eines Ausführungsbeispiels erläutert, dessen Einzelheiten sich grundsätzlich auf alle Anspruchskategorien beziehen.

Im Einzelnen zeigen:
- Figur 1: eine perspektivische Ansicht einer erfindungsgemäßen Anschlussbox mit einem geöffneten Gehäuse und einem in ein Unterteil des Gehäuses eingelegten Bodenteil;
- Figur 2: eine analoge perspektivische Ansicht, wobei eine Montageplatte auf dem Bodenteil angebracht ist;
- Figur 3: eine analoge Ansicht, wobei auf der Montageplatte ein Kombinationsteil mit einem Einbauteile-Satz angebracht ist;
- Figur 4: eine Seitenansicht der Anschlussbox aus Figur 1, wobei in einem von dem Bodenteil nach links oben hochragenden Aufnahmeteil Spleißkassetten gelenkig aufgenommen sind und in Figur 4 hochgeklappt dargestellt sind (dabei sind in Figur 4 vordere Seitenwandteile des Gehäuseunterteils aus darstellerischen Gründen weggelassen);
- Figur 5: den Deckel der Anschlussbox, der in den Figuren 1-4 hochgeklappt dargestellt ist, einzeln und von außen bzw. oben in perspektivischer Darstellung;
- Figur 6: das Unterteil der Anschlussbox einzeln, insbesondere ohne eingesetztes Bodenteil;
- Figur 7a: das Bodenteil der Anschlussbox einzeln in Figur 1 entsprechender perspektivischer Darstellung und zur plastischeren Sichtbarkeit mit Grauschattierungen;
- Figur 7b: eine zu Figur 7a identische Darstellung, jedoch ohne Grauschattierungen;
- Figur 8: die Montageplatte aus Figur 2 und 3 einzeln und in abweichender Perspektive sowie ohne Kombinationsteil;
- Figur 9a: das Kombinationsteil aus Figur 3 einzeln und in ähnlicher Perspektive, und zwar zur plastischeren Darstellung grauschattiert;
- Figur 9b: die Darstellung der Figur 9a, jedoch ohne Grauschattierung;
- Figur 10: die Situation aus Figur 3 in anderer Perspektive;
- Figur 11: eine zu Figur 10 analoge Darstellung, jedoch unter Weglassung der Montageplatte aus Figur 10 und mit alternativer Befestigung des Kombinationsteils an dem Aufnahmeteil für die Spleißkassetten;
- Figur 12: die Montageplatte aus Figur 8 in Draufsicht, wobei ein Teil weggebrochen ist;
- Figur 13: eine Anschlussbox mit im Vergleich zu den Figuren 1-4 sowie 10 und 11 abweichendem Innenaufbau in Figur 1 entsprechender perspektivischer Darstellung;
- Figur 14: perspektivisch ein Einzelteil des Innenaufbaus aus Figur 13;
- Figur 15: das Bodenteil aus den Figuren 7 mit darin montierten Einzelteilen und einer beispielhaften Kabelführung;
- Figur 16: eine ähnliche Darstellung wie Figur 15, jedoch mit anderen montierten Einzelteilen und einer anderen beispielhaften Kabelführung;
- Figur 17: eine Draufsicht auf das Bodenteil der Anschlussbox mit beispielhaft eingezeichneter Kabelführung;
- Figur 18: eine Unteransicht zu Figur 17;
- Figur 19: eine weitere Aufsicht auf das Bodenteil mit einer weiteren beispielhaften Kabelführung;
- Figur 20: eine perspektivische Ansicht des Unterteils und des darin eingesetzten Bodenteils der Anschlussbox bei hochgeklappter Montageplatte zur Erläuterung einer weiteren beispielhaften Kabelführung; und
- Figur 21: eine Ansicht analog zu Figur 20, jedoch mit heruntergeklappter Montageplatte und noch einer beispielhaften Kabelführung.

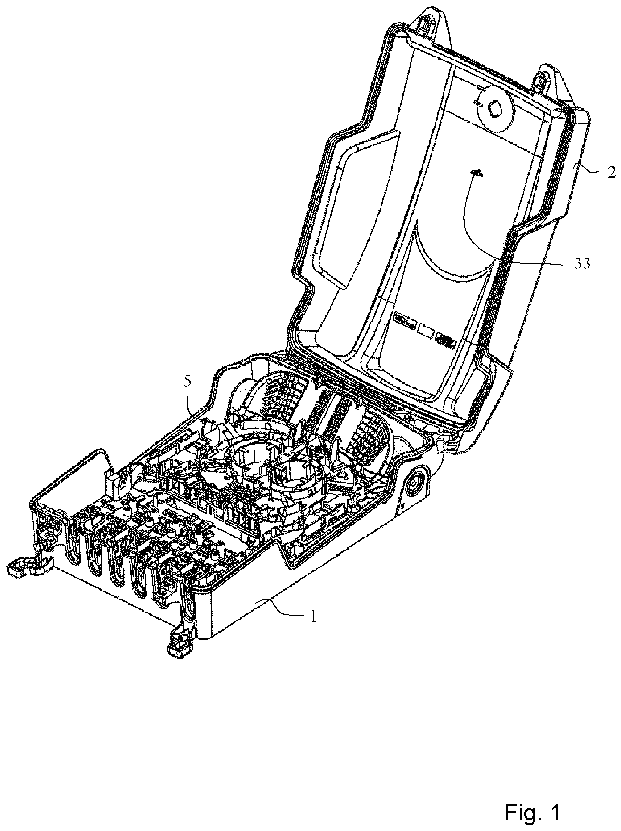

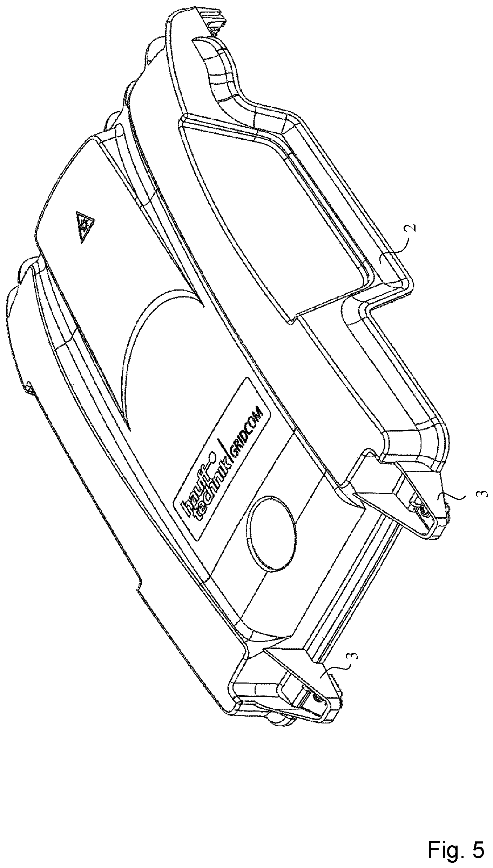

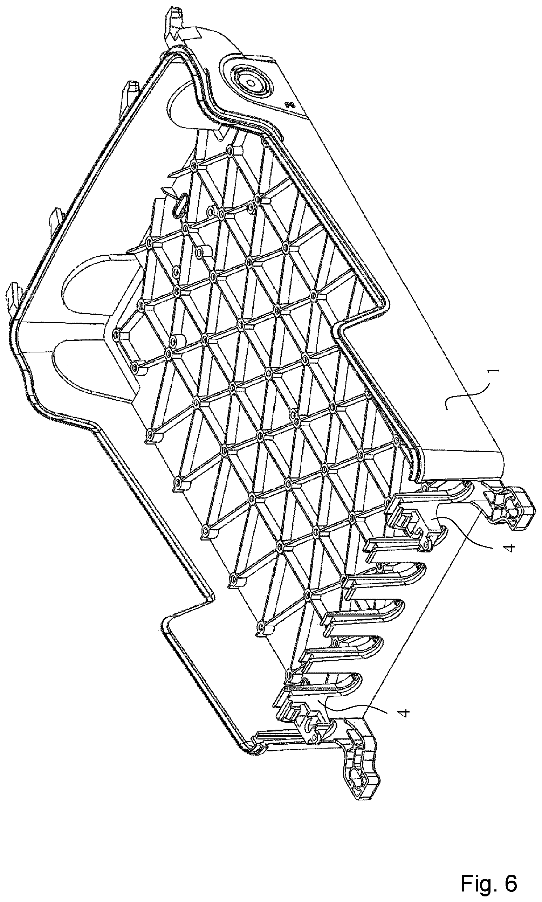

Die erfindungsgemäße Anschlussbox für Glasfaseranschlüsse in den Figuren 1-4 weist ein Gehäuse auf, dass aus einem Unterteil 1 gemäß Figur 6 und einem Deckel 2 gemäß Figur 5 besteht. Diese können an der in den Figuren 5 und 6 hinteren rechten Seite rastend in eine Gelenkverbindung miteinander gebracht werden, sodass der Deckel 2 auf- und zuklappbar ist. Die Figuren 1-4 und andere zeigen den aufgeklappten Zustand des Deckels 2.

Zur Erleichterung der Darstellung wird hier eine horizontale Ausrichtung des Unterteils 1 angenommen, die aber in der praktischen Anwendung nicht zwingend ist. Insbesondere kann dieses mit seiner in den Figuren 1-4 und 6 nach unten weisenden Seite auch an einer Wand montiert werden, sodass der Deckel 2 dann aus einer geschlossenen vertikalen Position über eine horizontale Position hinaus aufgeklappt werden kann und muss, um Zugang zum Innenraum der Anschlussbox zu erhalten.

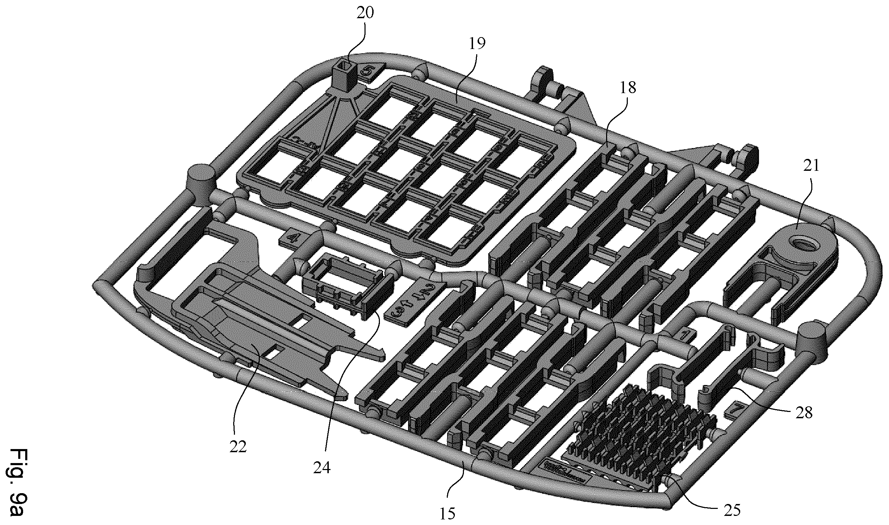

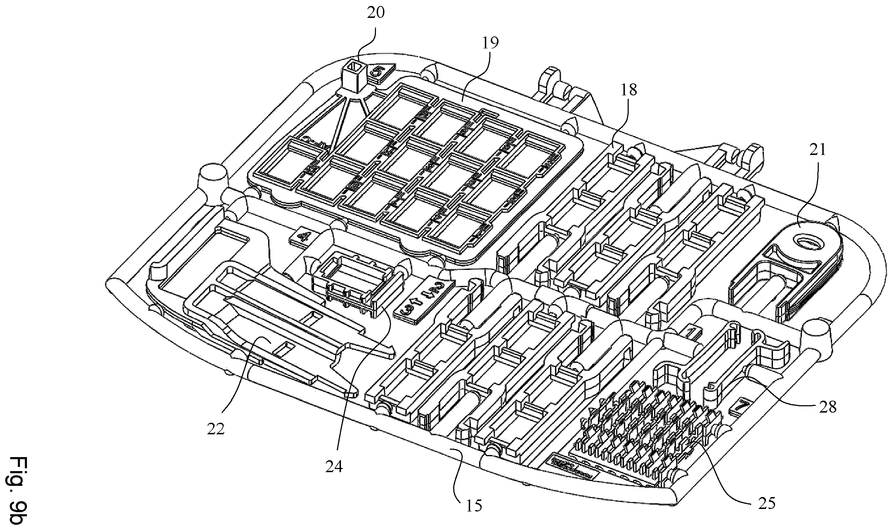

Im geschlossenen Zustand können Deckel 2 und Unterteil 1 auch über ein Schloss miteinander verriegelt werden, bei diesem Ausführungsbeispiel ist das optional. Das Schloss kann in dem in Figur 5 links vorne sichtbaren kreisförmigen Feld in dem Deckel 2 in einer (durch Ausbrechen eines hierzu vorgesehenen Teils herzustellenden) Öffnung montiert werden, ist aber an sich nicht gezeigt. Es schließt mit einem Riegel gegen ein in Zusammenhang mit den Figuren 9 noch erläutertes Kunststoff-Schließblech 22. Außerdem kommen die Vorsprünge 3 des Deckels 2 im geschlossenen Zustand zur Deckung mit den Vorsprüngen 4 des Unterteils 1 und es können hier Verschraubungen oder Verplombungen vorgenommen werden.

Im geschlossenen Zustand schützt die Anschlussbox vor allem von mechanischen Beschädigungen oder unbefugten Zugriffen auf den Innenraum. Im geschlossenen Zustand besteht ferner ein gewisser Feuchtigkeits- und Nässeschutz. Insbesondere ist das Unterteil 1 aus Figur 6 nach unten hin geschlossen; das dargestellte Gitter ist also eine Versteifung. Das Gitter weist an den Kreuzungspunkten (zunächst geschlossene) Stellen zum Anschrauben, z. B. auf eine Wand, auf. An den sich berührenden Kanten von Unterteil 1 und Deckel 2 können in bei diesem Beispiel deckelseitige Nuten Dichtungen eingelegt werden und jedenfalls greifen Vorsprünge am Unterteil in diese Nuten ein. Außerdem bieten die ungefähr U-förmigen Öffnungen in der nach links unten weisenden Wand des Unterteils 1 die Möglichkeit, Kabelabdichtungen anzubringen. Die in Figur 6 links vorne gut sichtbaren Montagearme und ein nicht sichtbarer, aber ähnlicher mittiger Montagearm rechts hinten erlauben außerdem eine Montage des Unterteils 1 ohne innere Öffnungen in dem Unterteil 1 zur Wandseite, also mit besserem Feuchtigkeitsschutz.

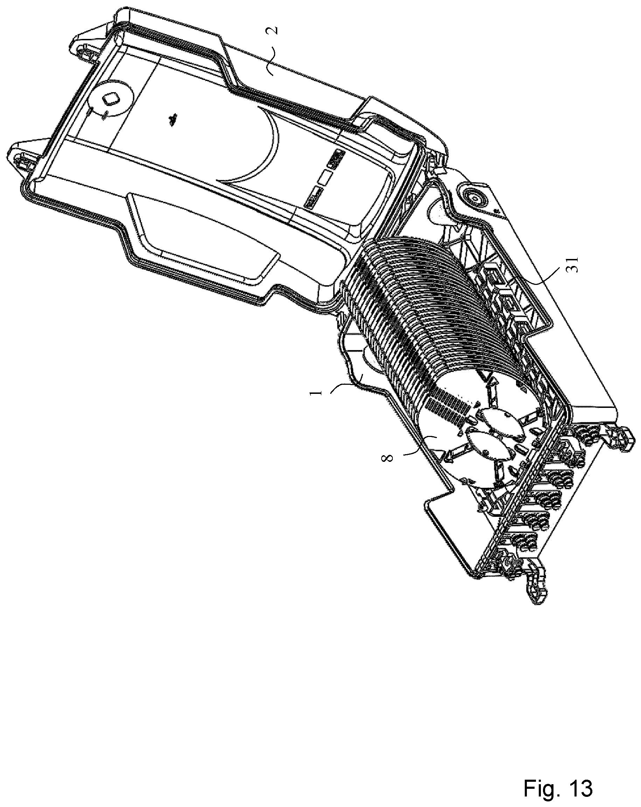

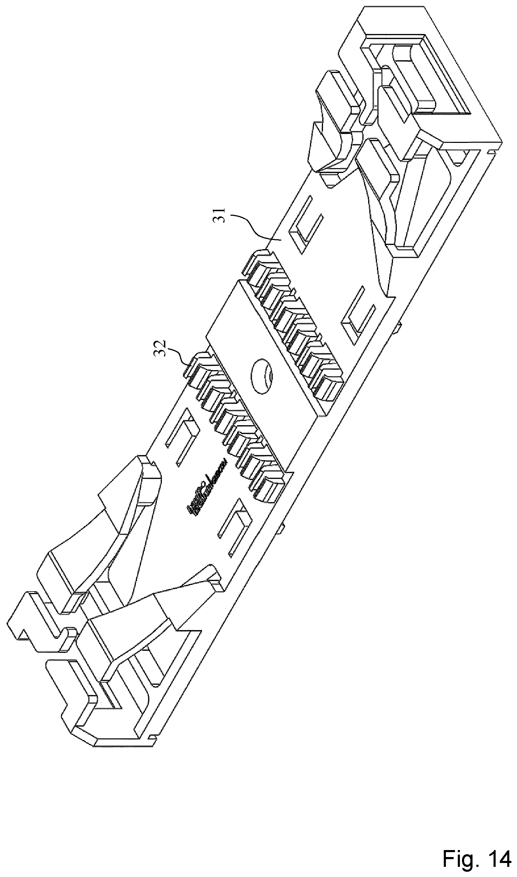

Die Anschlussbox kann in ihrem Innenraum in unterschiedlicher Weise genutzt werden und für verschiedene Anschlussoptionen (Spleiß- und Patchverbindungen) sowie Kabelüberlängen unterschiedlicher Konfigurationen anbieten. Anhand der Figuren 1-12 wird eine sehr flexible Innenausstattung dargestellt und die Figuren 13 und 14 verdeutlichen eine Alternative dazu, die auf eine maximale Zahl von Spleißverbindungen ausgerichtet ist.

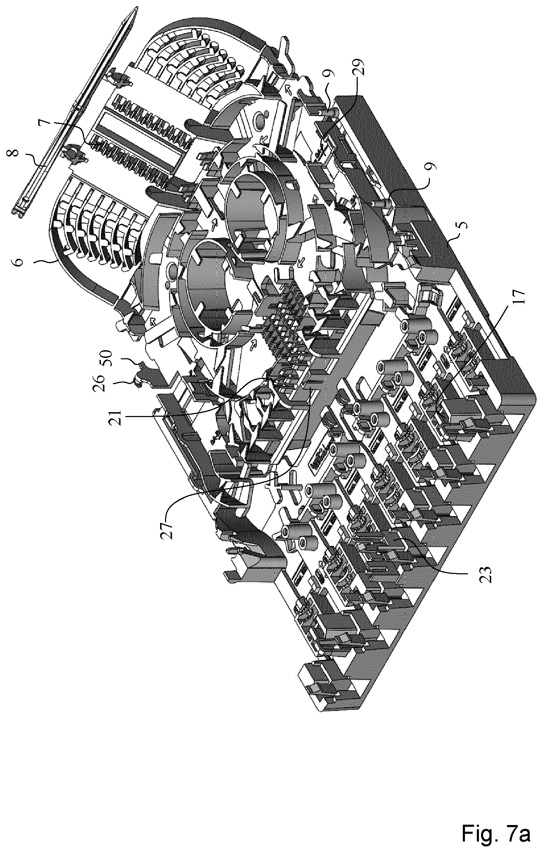

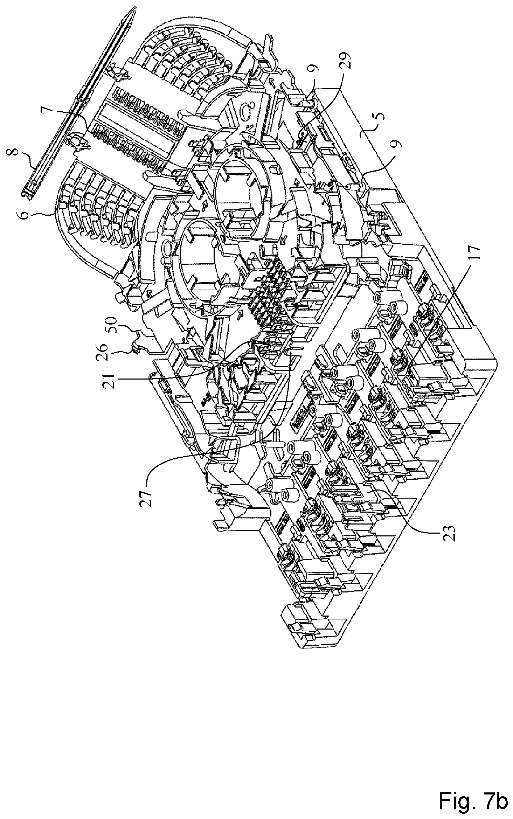

In Figur 1 sieht man bereits ein in das Unterteil 1 eingesetztes Bodenteil 5, das seinerseits in den Figuren 7 einmal mit Grauschattierungen und einmal ohne dargestellt ist. Dieses Bodenteil 5 füllt das Unterteil im Wesentlichen flächig aus und weist an der der Gelenkverbindung zwischen Unterteil 1 und Deckel 2 zugewandten Seite einen schräg aufsteigenden Fortsatz auf, nämlich ein Aufnahmeteil 6 mit schräg übereinanderliegenden Gelenkaufnahmen 7 für in Figur 4 sichtbare Spleißkassetten 8, in diesem Fall maximal sieben Stück. In den Figuren 7 sieht man rechts und links davon Führungen für in die Spleißkassetten achsnah einlaufende oder daraus herauslaufende einzelne Kabel, insbesondere Pigtail-Kabel.

Die Figuren 4 und 7 verdeutlichen miteinander, dass die Spleißkassetten 8 im heruntergeklappten Zustand horizontal liegen und einen hinteren Teil der Strukturen des horizontalen Bereichs des Bodenteils 5 in den Figuren 7 verdecken, während sie im hochgeklappten Zustand gemäß Figur 4 den Zugang dazu erlauben. Außerdem wird natürlich der Zugang zu einzelnen Spleißkassetten 8 ebenfalls durch selektives Hochklappen erreicht.

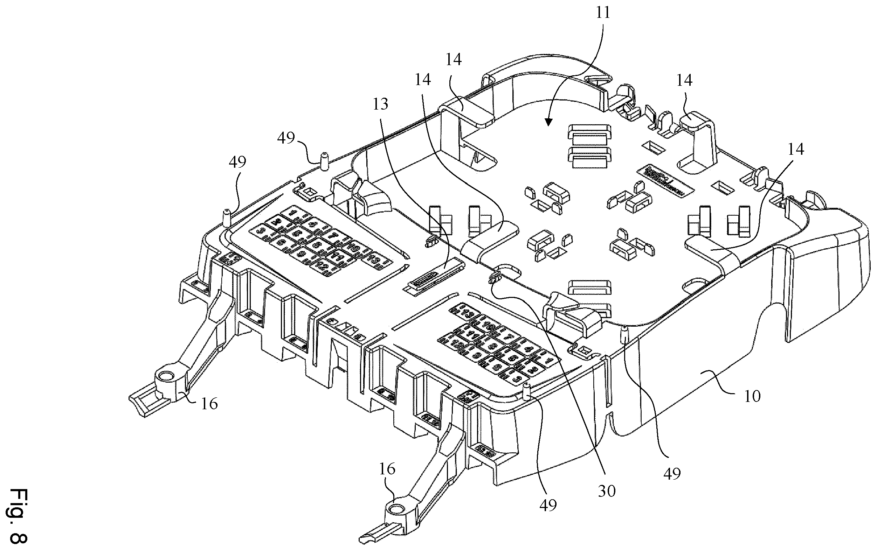

Über dem Aufnahmeteil 6 sieht man in Figuren 7 eine an dem Aufnahmeteil 6 angeformte und horizontal liegende Nadel 8. Diese Nadel 8 kann abgebrochen und mit ihren beiden Enden zum Manipulieren von Kabeln benutzt werden. Wenn sie nicht benötigt wird, so kann sie mithilfe des an ihrem in den Figuren 7 linken Ende sichtbaren Lochs und eines weiteren etwa in ihrer Mitte auf in den Figuren 7 mit 9 bezeichneten vertikalen Stiften am Rand fixiert werden, liegt dann parallel zu dieser Kante des Bodenteils 5 und stört bei anderen Arbeiten nicht. In der dargestellten Form handelt sich um ein mit dem übrigen Bodenteil 5 und dem Aufnahmeteil 6 spritzgusstechnisch integriertes Teil. In analoger Form gilt das für die in Figur 8 mit 49 bezeichneten Stifte an dem im folgenden behandelten Teil 10.

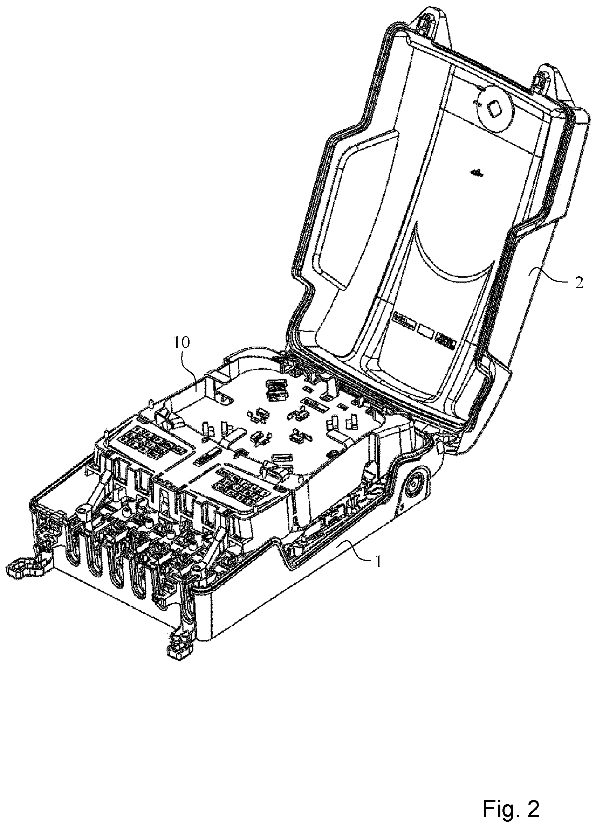

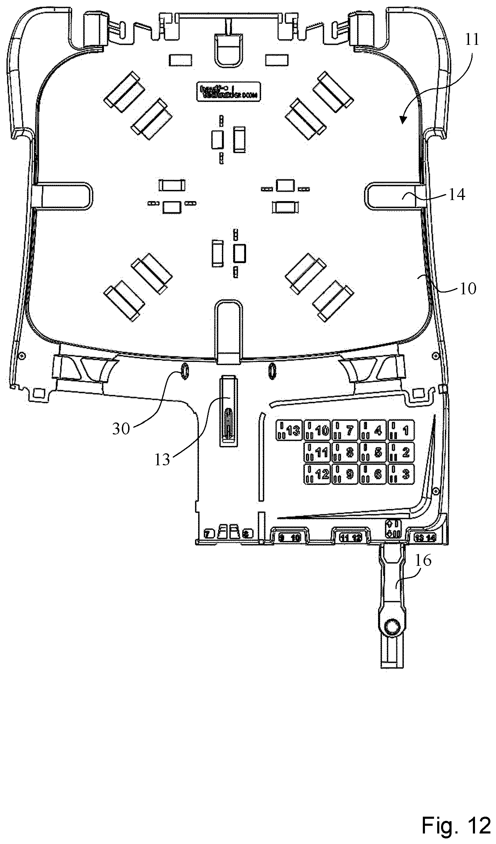

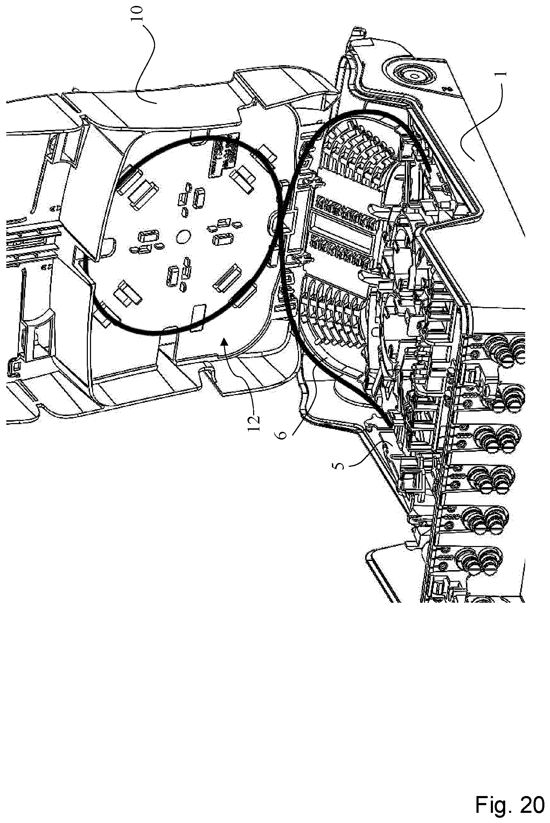

Figur 2 zeigt zusätzlich ein auf dem Bodenteil 5 angeordnetes deckelartiges Teil, nämlich die sog. Montageplatte 10, die einzeln für sich in Figur 8 und in Figur 12 zu sehen ist, wobei in Figur 12 ein vorderer linker Teil an Sollbruchstellen ausgebrochen ist. Diese Montageplatte 10 ist in eine Gelenkaufnahme eingerastet und ähnlich wie der Deckel 2 um eine hintere horizontale Achse klappbar. Im hochgeklappten Zustand erlaubt sie quasi wie in Figur 1 einen Zugang zu dem Bodenteil 5, den etwaigen Spleißkassetten 8 daran etc., vgl. Figur 20. Außerdem kann sie im hochgeklappten Zustand und bei vertikaler Lage der Anschlussbox (anders als in den Figuren 1-4) den hochgeklappten Deckel 2 sichern, sodass ein Monteur diesen nicht festhalten muss und beide Hände frei hat. Dazu ist der Vorsprung 33 (Figur 1) in dem Deckel vorgesehen, unter den die Montageplatte greifen kann. Umgekehrt sichert auch der Deckel 2 die Montageplatte 10.

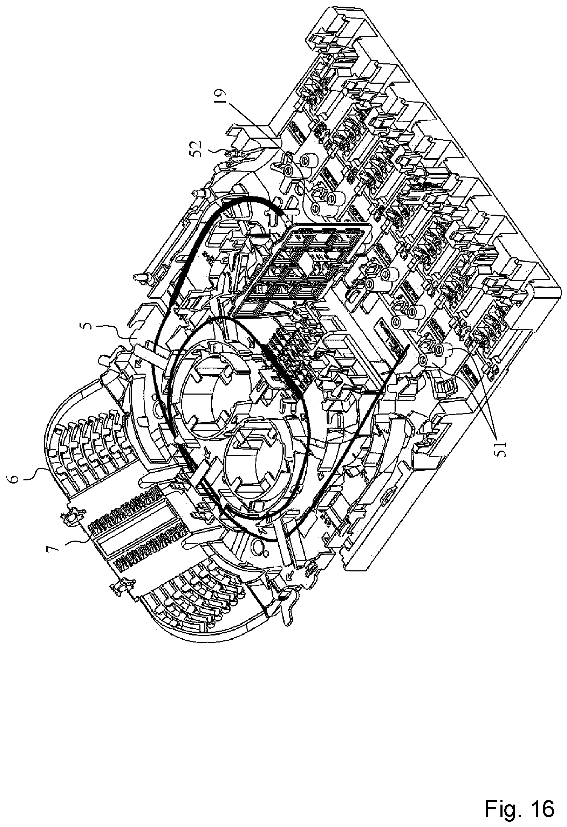

Die Montageplatte 10 enthält bei diesem Ausführungsbeispiel oberseitig und in Figur 8 sichtbar sowie zusätzlich unterseitig und in Figur 20 sichtbar jeweils eine Überlängenablage für Kabel. Die obere ist in Figur 8 mit 11 bezeichnet und die untere in Figur 20 mit 12. Außerdem sieht man in Figur 8 einen Dokumentenhalte-Clip zum Fixieren von Papierdokumenten bei Montagearbeiten zur Dokumentation der vorgenommenen Anschlüsse. Rechts und links davor sieht man Nummernfelder, die die Zuordnung von Nummern zu anhand Figur 16 näher zu erläuternden Patchstellen- bzw. Kupplungspositionen erleichtern.

Ferner erlauben die vier Haken 14 in Figur 8 neben dem Niederhalten abgelegter Kabelüberlängen auch die Halterung eines Kombinationsteils 15, das in den Figuren 9 dargestellt ist. Dieses Kombinationsteil 15 bildet einen integrierten Einbauteile-Satz, quasi ein Teilegitter, aus dem einzelne Einbauteile herausgebrochen werden können. Es kann als Kombinationsteil integral produziert und auch integral gehandhabt und gelagert werden.

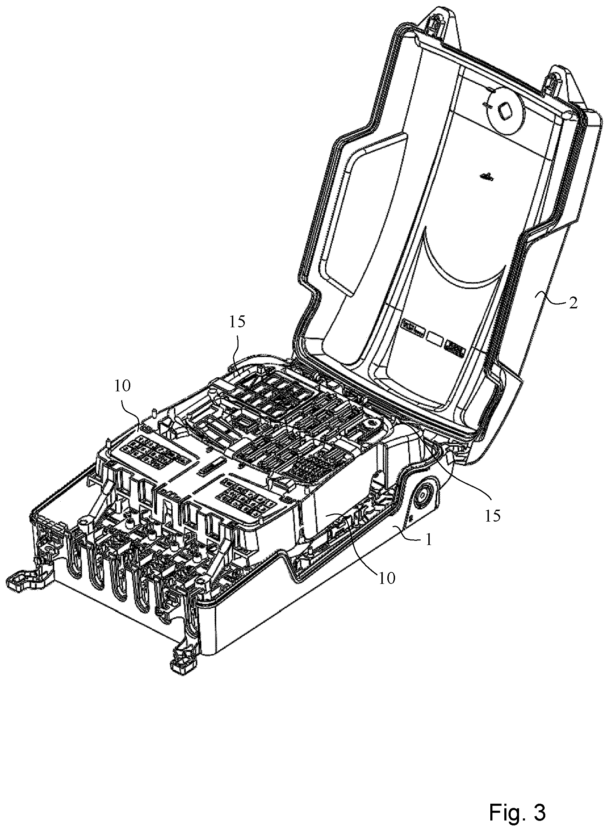

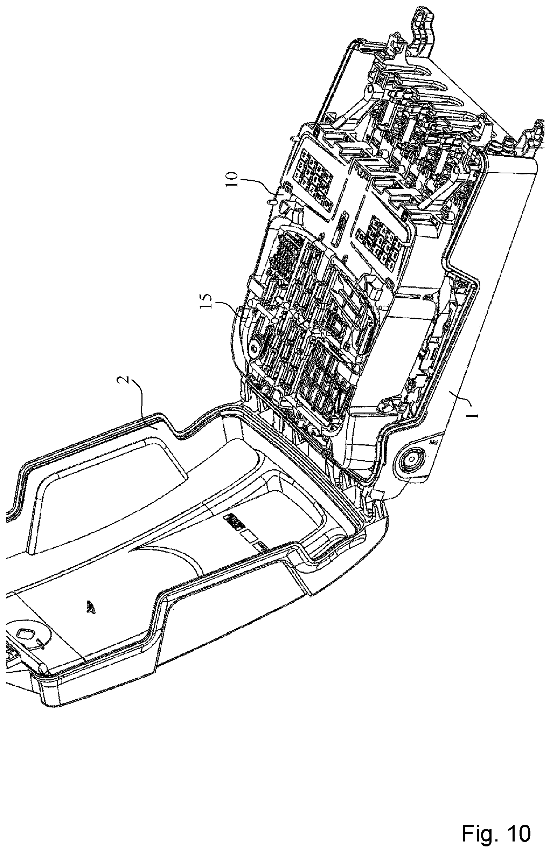

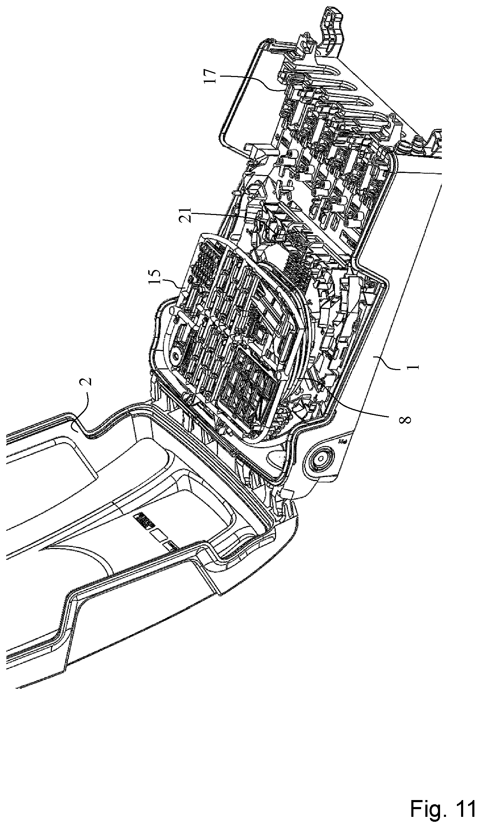

Figur 3 zeigt das Kombinationsteil 15 in der Überlängenablage 11 auf der Oberseite der Montageplatte 10. Wegen seiner begrenzten Dicke kann es auch bei einer begrenzten Zahl darunter liegender Kabel an dieser Stelle verbleiben oder wieder dort abgelegt werden. Alternativ kann es gelenkig eingeclipst werden in die Gelenkaufnahme für die Montageplatte 10, wenn diese nicht montiert sein sollte. Dies ist in Figur 11 im Vergleich zu Figur 10 (mit Montageplatte 10) dargestellt, wobei das Kombinationsteil 15 in Figur 11 genauso hochgeklappt werden kann wie die in Figur 4 in diesem Zustand gezeigten Spleißkassetten 8.

An einer von der Gelenkachse abgewandten Seite, nämlich in Figur 8 links vorne, weist die Montageplatte zwei auskragende Arme 16 mit Schraublöchern an den Enden auf. Sie kann im herunter geklappten Zustand mit deren Hilfe verschraubt werden, wobei die Schrauben in Öffnungen 17 eingeschraubt werden, die in den Figuren 7 und 11 angedeutet sind, vgl. auch Figur 10. Distal von den entsprechenden Löchern der Arme 16 weisen diese Arme außerdem Laschen auf, mit denen alternativ oder zusätzlich eine Verplombung angebracht werden kann.

Dies hat mit der Funktion der Montageplatte 10 als Deckel zu tun. Wie z. B. Figur 10 zeigt, deckt die Montageplatte 10 im herunter geklappten Zustand wesentliche Teile des Bodenteils 5 ab, insbesondere den Stapel aus Spleißkassetten 8 und wesentliche Teile der von dort ausgehenden oder dort einlaufenden Pigtail-Kabel. Vor allem in Zusammenhang mit wählbaren Optionen für Patchstellen bzw. Steckkupplungen sind dabei die gelenkachsenfernen Ecken der Montageplatte 10 ausbrechbar, vgl. Figur 12, sodass dort Patchkabel manipuliert werden können, die in einem noch zu erläuternden Kupplungshalter 19 ein- und ausgesteckt werden können. Von dem Kupplungshalter 19 ausgehende Pigtail-Kabel können dann unter der noch bestehenden Ecke hindurch geführt werden. Natürlich können auch beide Ecken ausgebrochen werden, etwa um viele Kupplungshalter 18 eines anderen Typs unterzubringen.

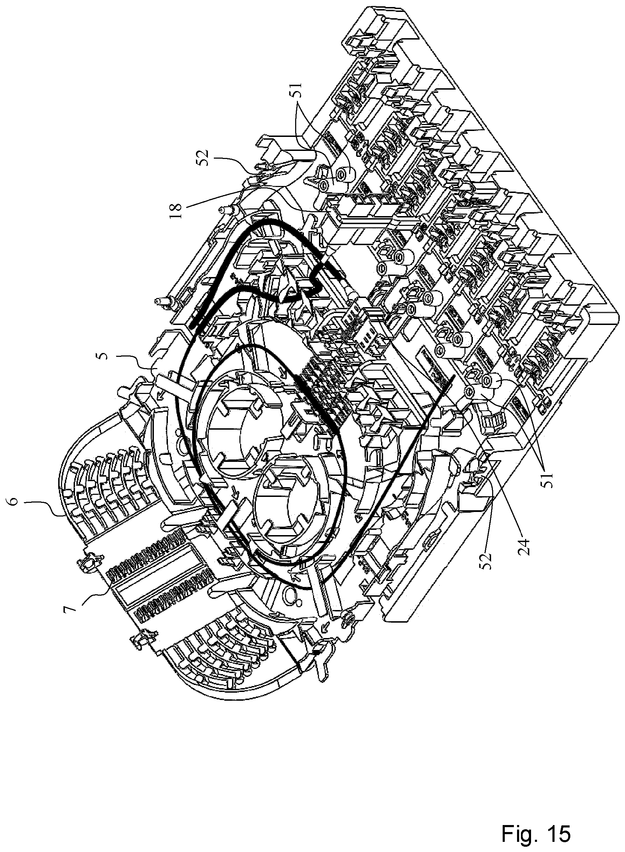

Die entsprechenden Kupplungshalter 18, 19 sind Teile des Kombinationsteils 15 in den Figuren 9, wobei es einen ersten Typ Kupplungshalter 18 gibt, der bei diesem Ausführungsbeispiel für eine lokale Leitungsrichtung der entsprechenden gekuppelten Leitungen entlang der Längsrichtung der Anschlussbox ausgelegt ist, vgl. Figur 15. Es gibt sieben entsprechende Positionen dafür, wobei in Figur 15 die dritte von rechts gewählt ist. Ein solcher Kupplungshalter 18 enthält zwei übereinanderliegende Öffnungen für jeweils eine Duplexkupplung, sodass also pro Kupplungshalte 18 maximal vier Einzelfasern gepatcht werden können. Im heruntergeklappten Zustand der Montageplatte 10 sind die Kupplungshalter 18 in allen sieben Positionen von dieser oberseitig gehalten und für Patchkabel von vorne zugänglich. Dazu muss keine Ecke der Montageplatte 10 ausgebrochen werden. Das Kombinationsteil 15 weist sechs solche Kupplungshalter 18 auf.

Ferner gibt es einen zweiten Typ, nämlich einen Matrix-Kupplungshalter 19, zu dem auf Figur 16 verwiesen wird. Diese Matrix 19 kann mit einer im Querschnitt quadratischen Achse 20 in einen Aufnahmebereich 21 (vgl. Figuren 7 und 11) eingeclipst werden und ist in diesem Zustand (bei hochgeklappter Montageplatte 10) aus der in Figur 16 dargestellten Position um etwa 90° nach links klappbar, um im Bedarfsfall Platz zu schaffen. In der Matrix 19 finden maximal 13 Duplexkupplungen Platz, wobei, wie schon erwähnt, zur Zugänglichkeit der Patchkabel (in Figur 16 nicht eingezeichnet, aber dort nach links vorne weisend) eine der beiden Ecken der Montageplatte 10, im Fall der Figur 16 die linke, ausgebrochen werden sollte. Andererseits verdeckt die verbleibende Ecke gemeinsam mit der restlichen Montageplatte 10 die Pigtail-Kabel, vgl. Figur 16 mit den Figuren 10 und 12.

Generell dient die Montageplatte 10 im heruntergeklappten Zustand zur Fixierung der Kupplungshalter 18 und 19; in beiden Fällen greifen die oberen Bereiche der Kupplungshalter 18 und 19 in entsprechende Aufnahmen in der Montageplatte 10 ein und werden dadurch auch oberseitig stabilisiert.

Zusätzlich gibt es einen zusätzlichen Kupplungshalter 24, der analog zu der Matrix 19 eine 13. Duplexkupplung zulässt. Dieser "13. Kupplungshalter" 24 kann an einer in den Figuren 7 mit 27 bezeichneten Stelle befestigt werden, vgl. Figur 15. Eine 13. Kupplung kann z. B. für einen separaten Gebäudeanschluss von Interesse sein und ist deswegen sowohl bei den in Längsrichtung verlaufenden als auch bei den quer dazu verlaufenden Kupplungsoptionen möglich.

Die hier erwähnten Duplexkupplungen vom Typ LC können auch durch Einfachkupplungen vom Typ SC oder E2000 ersetzt werden, was die Zahl der maximal verbindbaren Kabel halbiert.

Ferner zeigen die Figuren 9 ein Werkzeug 21 zum Lösen von Steckverbindungen, das an sich bekannt, hier aber besonders praktisch integriert ist. Mit 22 ist ein (in einem in den Figuren 7 mit 22 bezeichneten Bereich) rastend einsteckbares "Schlossblech" bezeichnet, das im eingesteckten Zustand ein Gegenlager für den Riegel des bereits erwähnten Deckelschlosses bildet, und zwar mit der etwas verbreiterten Flanke links neben seiner in den Figuren 9 deutlich sichtbaren großen Öffnung.

Das Werkzeug 21 kann übrigens an einem in den Figuren 7 mit 26 bezeichneten Haken befestigt werden, und zwar mithilfe der in den Figuren 9 erkennbaren ovalen Öffnung darin. Nach Drehen um 90° hängt das Werkzeug 21 dann an dem Haken 26 fest. Außerdem hat der Haken 50 rechts neben dem Haken 26 bei vertikal montierter Anschlussbox die Funktion, gerade nicht benötigte lose Kabel zur Seite "weg hängen" zu können. Alternative Halterungsmöglichkeiten für das Werkzeug sind in Figur 8 mit 30 bezeichnet.

Ferner gibt es einen Halter 25 für Spleißschutzeinrichtungen.

Schließlich enthält das Kombinationsteil 15 Klemmelemente 28 zur Montage an in den Figuren 7 mit 29 bezeichneten Stellen, mit denen in diesem sogenannten Absetzbereich Pigtail-Kabel mit nicht eingezeichneten Moosgummielementen und den Klemmelementen 28 geklemmt werden können.

Unter der Montageplatte 10, und zwar drehachsennäher als die besprochenen ausbrechbaren Ecken der Montageplatte 10, befindet sich ein durch die Anschlussplatte 10 effizient geschützter Bereich, der bisher im Wesentlichen in Zusammenhang mit der Aufnahme des Stapels Spleißkassetten 8 (vgl. Figur 4) besprochen wurde. Der Stapel der an dem Aufnahmeteil gelenkig gehaltenen Spleißkassetten 8 bildet dabei einen Anschlussbereich, wobei in der an sich bekannten Weise in den Spleißkassetten neben Spleißstellenablagen auch für die jeweils beteiligten Kabel eine Überlängenablage vorgesehen ist.

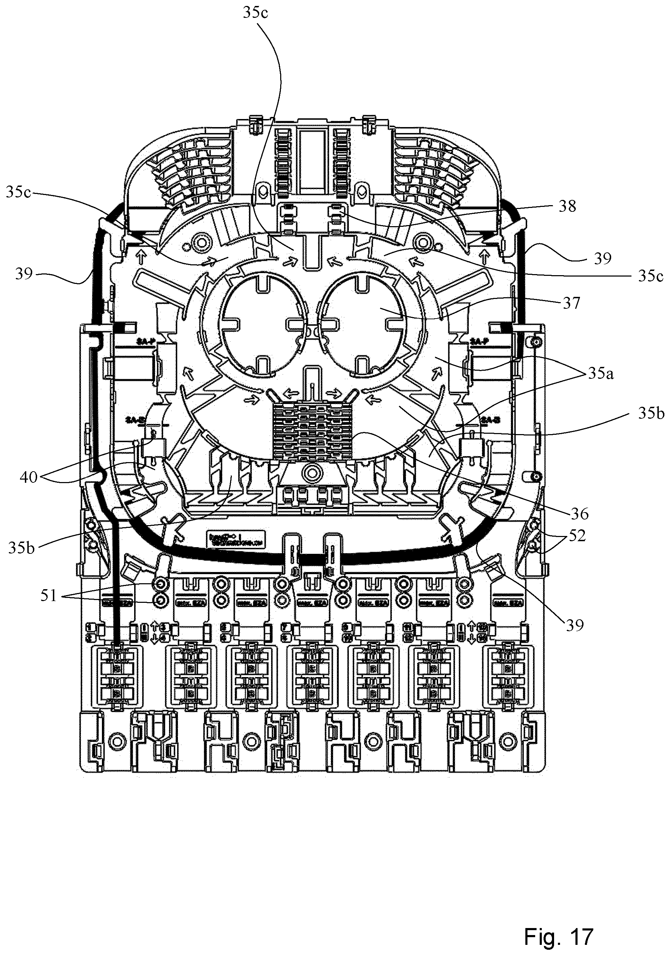

Unter dem Anschlussbereich ist in dem Bodenteil 5 eine in Draufsicht (etwa Figur 15) durchaus einer Spleißkassette ähnelnde Struktur vorgesehen, die allerdings eine erheblich größere Höhe aufweist und hier als "Mixer" bezeichnet wird. Insbesondere gibt es dort eine z. B. in den Figuren 15 und 16 für die eingezeichneten Kabel genutzte Überlängenablage 35a, b, c (Figur 17) und einen Ablagebereich 36 für Spleißstellen, in dem in den Figuren 15 und 16 ebenfalls eine beispielhafte Spleißschutzeinrichtung abgelegt ist. Wegen der größeren verfügbaren Bauhöhe kann die Spleißstellenablage 36 im Unterschied zu denen in den Spleißkassetten 8 doppelstöckig ausgeführt sein. Das ist der Hintergrund für das Teil 25 in dem Teilegitter/Kombinationsteil 15 aus den Figuren 9. Dieses Teil 25 bildet die obere Ebene, während in den Figuren 7 die untere Ebene zu sehen ist.

Die größere Bauhöhe erlaubt die Ablage dickerer Kabel, insbesondere in größerer Zahl von Wicklungen oder Kabeln und zwar insbesondere in den äußeren Bereichen 35b (unten) und 35c (oben) für nicht direkt einer Spleißstelle zuzuführende Wicklungen. Dort können z. B. 100 Kabelwicklungen bei 0,9 mm Stärke untergebracht werden.

Ferner können in den innersten Bereichen 37 (Figur 17) auch Überlängen nicht genutzter Pigtail-Kabel abgelegt werden. Da diese nicht genutzt sind, kommt hier auch ein Aufwickeln mit relativ kleinem Krümmungsradius in Betracht. Die Ablagen 37 sind zu diesem Zweck noch tiefer ausgeführt, was man z. B. in den Figuren 7 erkennen kann. Schließlich gibt es gewissermaßen auf der zu der Spleißstellenablage 36 entgegengesetzten und damit gelenkachsennahen Seite noch einen Aufnahmebereich 38 für relativ dicke Bauteile wie Filter oder Splitter, die in den Spleißkassetten selbst keinen Platz finden würden.

Im Sinn der Grundfläche außerhalb und im Sinn der Höhe unterhalb (abgesehen vom Boden der Ablagen 37) des Mixers gibt es eine weitere Überlängenablage, die anhand des dicken Kabels 39 in Figur 17 erkennbar ist und noch erläutert wird. Hier wird mit dem Kabel 39 die zuvor beschriebene Struktur quasi umwickelt.

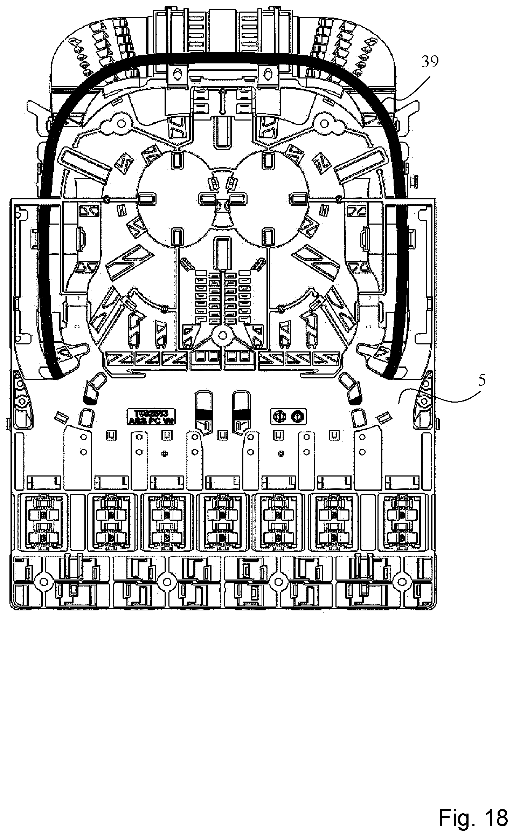

Der in Figur 10 rechts von der Montageplatte nicht nach oben abgedeckte Teil des Bodenteils 5 soll im Rahmen dieses Ausführungsbeispiels nicht im Detail erläutert werden. Zusammengefasst geht es hier (im Sinn der Figur 10 von rechts nach links) um das abgedichtete Einführen und Hinausführen von unterschiedlichen Kabeln durch die in den Figuren 1-3 und 6 deutlich erkennbaren vorderseitigen U-Öffnungen in dem Unterteil 1 und entsprechende Elastomerdichtungen darin (eine davon ist in Figur 10 ganz vorne angedeutet, in Figur 17 und 18 weitere). In einer Ebene direkt dahinter / links davon können die Kabel umgebende Hüllen oder Röhren mit Kabelbindern und zu deren Fixierung vorgesehenen Bauteilen geklemmt werden. Ferner finden sich noch weiter links verschiedene Schraubdome zur Befestigung von Aramid-Fasern, die in an sich bekannter Weise der Zugentlastung von Bündelkabeln dienen. Zu diesen Elementen wird auf die parallel eingereichten weiteren Anmeldungen der Anmelderin verwiesen.

Bevor die Möglichkeiten der bisher dargestellten Ausgestaltung näher erläutert werden, soll anhand der Figuren 13 und 14 kurz die Flexibilität der Anschlussbox in anderer Weise dargestellt werden. In Figur 13 sind (Figur 4 an sich entsprechende) Spleißkassetten 8, jedoch in deutlich größerer Zahl, an auf dem Unterteil 1 befestigten Halterungen 31 mit dem Bezugszeichen 7 in den Figuren 7 ungefähr entsprechenden Gelenkaufnahmen 32 klappbar befestigt. Die Befestigungen 31 sind jeweils auf dem Unterteil 1 aufgeschraubt. Sie zeigen in Figur 14 rechts und links von den Gelenkaufnahmen 32 übliche Kabelniederhalter. In dieser Form kann die Anschlussbox statt der Verwendung des Bodenteils 5 und der übrigen darauf aufbauenden Teile zur Unterbringung einer maximalen Zahl von Spleißverbindungen benutzt werden.

Typischerweise werden zum Einführen eines Bündelkabels die beiden äußersten der bereits mehrfach erwähnten U-förmigen Öffnungen in der Vorderseite des Unterteils 1 verwendet, wobei dies mit oder ohne vorheriges Montieren eines Leerrohres und erst späteres Einblasen geschehen kann. Das Kabel oder das Leerrohr wird durch Klemmen fixiert. Ein durch ein Leerrohr geführtes Kabel kann z. B. mit einer an sich bekannten EZA (Einzelzugabdichtung) auf das Leerrohr abgedichtet werden, was insbesondere an einzelnen der in Figur 15 erkennbaren Plätze für die mögliche Montage eines Kupplungshalters 18 (statt dessen Montage) geschehen kann. Ferner kann eine Zugentlastung durch Festklemmen von Zugentlastungselementen im Kabel oder Bündelkabel an Schraubdomen erfolgen. Bei den inneren Plätzen betrifft das in der Regel dünnere Kabel und Aramid-Garn darin, welches an einem der Schraubdome 51 (Figur 15-17) fixiert werden kann. Bei den äußeren Plätzen betrifft es in der Regel dickere Kabel mit steifen Zentralelementen und Schraubklemmungen in den in Figur 15-17 mit 52 bezeichneten Bereichen.

Zu den Einzelheiten der Abdichtung (mit in den Figuren teilweise sichtbaren Elastomer-Dichtelementen) und Klemmung wird auf zwei parallel zu dieser Anmeldung von derselben Anmelderin eingereichte europäische Patentanmeldungen verwiesen, die diesen Teil im Einzelnen betreffen.

Dann kann eine Überlänge des Bündelkabels abgelegt werden, und zwar gemäß Figur 17, die eine Draufsicht auf das Bodenteil 5 zeigt. Dort sieht man ein als dicke schwarze Linie eingezeichnetes Bündelkabel 39, das links unten eintritt (Details zur Dichtung, Klemmung und EZA sind weggelassen) und relativ weit außen und insbesondere unter dem Aufnahmeteil 6 (vgl. die Figuren 4 und 7) umläuft. Dies kann mehrfach erfolgen, wobei das "Bündelkabel" 39 hier typischerweise bereits ein Bündel einzelner Kabel ist und seinen gemeinsamen Mantel kurz "stromabwärts" von der EZA verloren hat. Bei Bedarf könnte ein Teil der Kabel aus dem Bündel, der nicht unterbrochen und Anschlüssen in der Anschlussbox zugeführt werden soll, quasi spiegelbildlich zu dem Eintritt (links unten) dann auf der rechten Seite nach unten wieder aus der Anschlussbuchse herausgeführt werden, was in Figur 17 nicht eingezeichnet ist. Bei diesem Beispiel können in dem mit 37 bezeichneten Bereich 70 Wicklungen bei 1,2 mm Stärke abgelegt werden.

Z. B. im Hinblick auf den in Figur 17 unten quer verlaufenden Teil des Kabels 39 kann die zuvor bereits erwähnte Klappbarkeit der Matrix 19 aus Figur 16 vorteilhaft sein. Diese Matrix 19 kann nämlich hochgeklappt werden, um in diesem Bereich Wicklungen legen oder wegnehmen zu können.

Figur 18 verdeutlicht die Erläuterungen zu Figur 17, in dem sie den Verlauf des Kabels 39 von unten zeigt, also aus der Perspektive des Unterteils 1.

Figur 17 zeigt ferner einen dort mit 40 bezeichneten Einführbereich, in dem zumindest Teile des behandelten Bündelkabels 39 in den sogenannten Mixer mit seiner Überlängenablage 35, der Spleißstellenablage 36 etc. eingeführt und dabei in der Höhe etwas angehoben werden können. Einer spiegelbildliche und analoge Struktur gibt es auf der rechten Seite, in Figur 17 nicht beziffert, zum "Absetzen", d. h. Herausführen aus diesem Bereich in die Ebene darunter. Natürlich können Kabel auch direkt von einer EZA durch diesen Einführbereich 40 geführt werden. Typischerweise werden dort in (oder gleich stromabwärts von) dem Einführbereich 40 an einer Moosgummiklemmung verbleibende Schutzmäntel entfernt und die Einzelfasern freigelegt. Diese Einzelfasern werden dann in dem sogenannten Mixer oder, typischerweise nach einer Umrundung dort, in einer der Spleißkassetten 8 darüber angeschlossen.

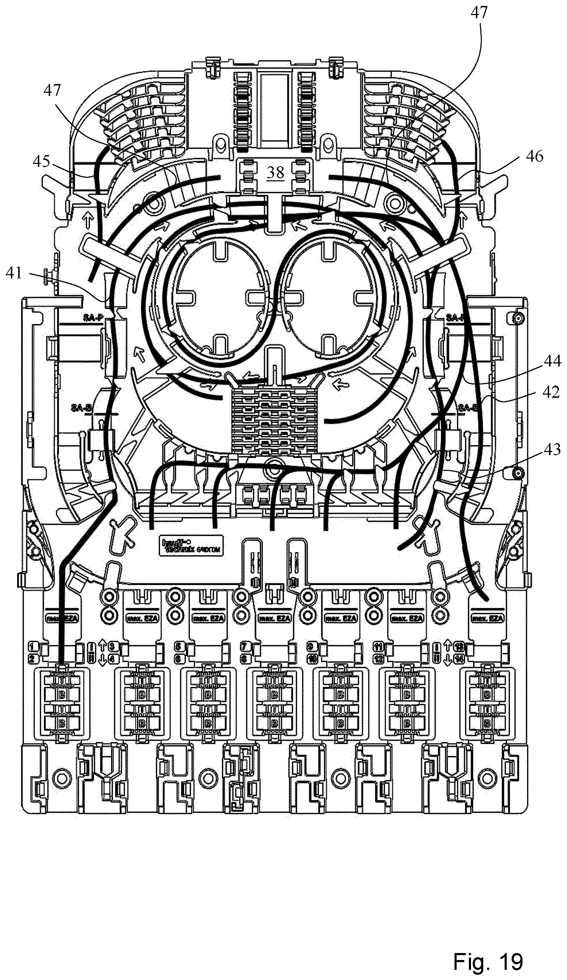

Figur 19 zeigt diese alternative Kabelführung, wobei das Kabel hier das Bezugszeichen 41 trägt. Im rechten Bereich der Figur 19 sind aus dem Mixer auslaufende Kabel dargestellt, wobei das rechteste die Nummer 42 trägt und andeutet, dass ein Kabel ganz rechts unten wieder aus der Anschlussbox herausgeführt werden kann (analog zur Einführung links unten). Ein weiteres Kabel 43 zeigt eine mögliche Zuführung zu Patchstellen/Kupplungen in der in Figur 16 dargestellten Matrix 19, also mit quer zur Längsrichtung (und in Figur 19 horizontal) verlaufender lokaler Leitungsrichtung an der Kupplung.

44 bezeichnet beispielhafte Verläufe in Richtung zu Kupplungspositionen wie in Figur 15 mit entsprechenden Kupplungshaltern 18.

Oben in Figur 19 sieht man links mit 45 und rechts mit 46 auf die Spleißkassetten 8 zulaufende bzw. davon herkommende Kabelverläufe.

Schließlich bezeichnet 47 einen Kabelverlauf zu dem bereits erwähnten Aufnahmebereich 38 für Splitter oder Filter.

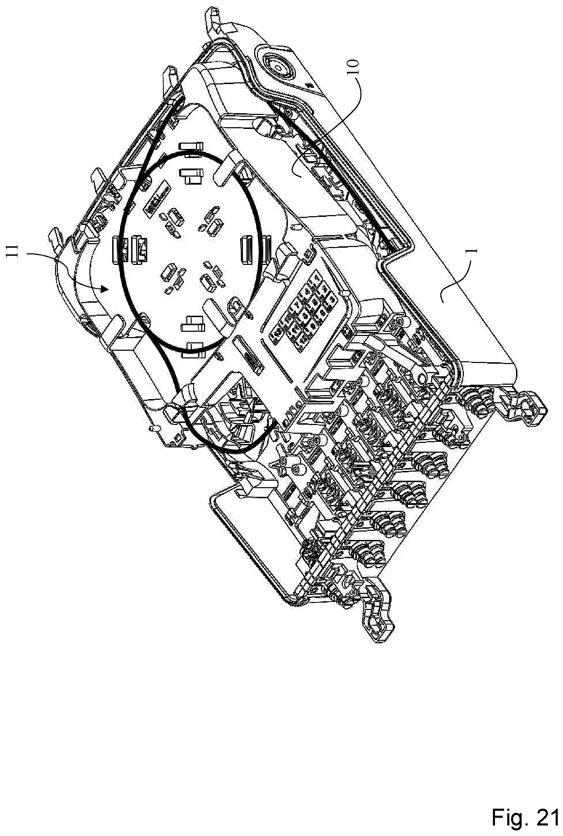

Figur 20 und Figur 21 geben Beispiele für Kabelführungen zu den beiden Überlängenablagen 11 und 12 der Montageplatte 10. In Figur 20 ist dies für die unterseitige Überlängenablage 12 dargestellt und in Figur 21 für die oberseitige Überlängenablagen 11. Man erkennt, dass in beiden Fällen erhebliche Volumina für dicke oder viele Kabel zur Verfügung stehen. Diese können bei Bedarf auch mit Kabelbindern oder anderweitig fixiert werden. In Figur 20 handelt es sich um ein von der Vorderseite des Unterteils 1 einlaufendes und rechts wieder zur Vorderseite auslaufendes ununterbrochenes Kabel, z. B. einen durchlaufenden Teil eines Kabelstrangs, dessen anderer Teil in der Anschlussbox angeschlossen wird. In Figur 21 handelt es sich um ein links von einem Kupplungsplatz in der Matrix 19 (Figur 16) ausgehendes Patchkabel, das ebenfalls dann weiter rechts zur Vorderseite des Unterteils 1 verläuft.

Kabel können auch von hinten auf die Montageplatte 10 und deren oberseitige Überlängenaufnahme 11 geführt werden, also quasi spiegelbildlich zu dem in Figur 21 rechts aus der Überlängenablage 11 herauslaufenden Kabel.

Die in Figur 20 dargestellte Möglichkeit der Unterbringung von Kabelüberlängen in der Überlängenablage 12 ist hinsichtlich ihres Volumens davon abhängig, ob und wie viele Spleißkassetten 8 verwendet werden, weil diese ebenfalls Bauraum in diesem Bereich unter der Montageplatte 10 benötigen. Das gilt auch umgekehrt für eine ebenfalls mögliche Überlängenablage auf dem Mixer, die nicht gezeichnet ist. Dort können an verschiedenen Stellen Kabelbinder befestigt werden, sodass das Volumen auch unabhängig von der Montageplatte 10 für die Überlängenablage zur Verfügung steht. Dabei würden die abgelegten Überlängen allerdings nicht einfach mit hochgeklappt, um den Zugang zu Strukturen darunter zu erleichtern.

## Patentansprüche

1. Glasfaser-Anschlussbox mit
einem Gehäuse (1, 2) und
einem Einbauteile-Satz (15) nicht montierter Einbauteile für die Anschlussbox,
welcher Satz Kupplungseinrichtungen (18, 19, 24), nämlich Kupplungen oder Kupplungshalter, als Einbauteile umfasst,
wobei die Kupplungseinrichtungen (18, 19, 24) aus dem Satz (15) nach Zahl und Position wahlweise in dem Gehäuse (1, 2) befestigbar sind,
**dadurch gekennzeichnet, dass** der Einbauteile-Satz (15) als zumindest ein einstückiges, vorzugsweise spritzgegossenes Kombinationsteil mit einer Mehrzahl zusammenhängender Einbauteile realisiert ist, welche Einbauteile aus dem Kombinationsteil abtrennbar sind.

2. Anschlussbox nach Anspruch 1, bei welcher die Kupplungseinrichtungen (18, 19, 24) in verschiedenen Leitungsrichtungen der jeweiligen Patchstellen befestigbar sind.

3. Anschlussbox nach Anspruch 1 oder 2, bei welcher das Kombinationsteil in dem Gehäuse befestigbar ist.

4. Anschlussbox nach einem der vorstehenden Ansprüche, bei dem der Einbauteile-Satz (15), vorzugsweise das Kombinationsteil, ferner ein Werkzeug (21) zum Demontieren von Steckverbindern, ein Klemmteil (28) für Glasfaserkabel und/oder ein Schlossblech (22) für das Gehäuse (1, 2) aufweist.

5. Anschlussbox nach einem der vorstehenden Ansprüche , welche eine innere und relativ zu dem Gehäuse (1, 2) klappbar darin gehaltene Montageplatte (10) aufweist, an welcher Montageplatte (10) das Kombinationsteil befestigbar ist.

6. Anschlussbox nach Anspruch 5, bei welcher die Montageplatte (10) lösbar in dem Gehäuse (1, 2) gehalten ist und das Kombinationsteil anstelle der Montageplatte (10) in dem Gehäuse (1, 2) befestigbar ist.

7. Anschlussbox nach einem der vorstehenden Ansprüche mit einer Nadel (8) als Manipulationshilfe, welche Nadel (8) an ein Teil der Anschlussbox angeformt und davon zum Gebrauch abtrennbar ist.

8. Anschlussbox nach einem der vorstehenden Ansprüche mit einem Anschlussbereich für Spleißstellenablagen (8) und/oder Patchstellen und einem Bodenteil (5) unter dem Anschlussbereich, in welchem Bodenteil (5) eine Überlängenablage (35) für bis zu mindestens sechs Glasfaserkabel mit einer Stärke von jeweils mindestens 0,5 mm vorgesehen ist.

9. Anschlussbox nach Anspruch 8 mit einer Aufnahmeeinrichtung (38) für Filter und/oder Splitter in dem Bodenteil (5) und/oder mit Ausnehmungen für nicht genutzte Steckverbindungselemente in dem Bodenteil (5).

10. Anschlussbox nach Anspruch 8 oder 9 mit einer Überlängenablage (35) für Strangkabel mit einer Stärke von mindestens 0,8 mm außerhalb des Bodenteils (5) und zwischen dem Bodenteil (5) und dem Gehäuse (1, 2).

11. Anschlussbox nach einem der vorstehenden Ansprüche, welche hinsichtlich der Montagemöglichkeiten für die Einbauteile aus dem Satz (15) und einer Eintrittsposition eines Glasfaser-Kabelstrangs bezüglich einer Mittelebene spiegelsymmetrisch ist.

12. Verfahren zur Individualisierung einer Glasfaser-Anschlussbox, bei welchem eine Anschlussbox nach einem der vorstehenden Ansprüche als eine in einer Mehrzahl identischer Anschlussboxen bevorratet wird und danach durch Auswahl von Einbauteilen aus dem Einbauteile-Satz (15) der Anschlussbox und Montage dieser ausgewählten Einbauteile in dem Gehäuse (1, 2) individualisiert wird.

13. Verfahren nach Anspruch 12, bei welchem eine Mehrzahl Anschlussboxen und Einbauteile-Sätze (15) hergestellt, danach zu einem Kunden transportiert und danach die Einbauteile-Sätze (15) in der Mehrzahl Anschlussboxen bevorratet werden.

14. Verwendung einer Mehrzahl Anschlussboxen nach einem der Ansprüche 1-11, bei welcher die Anschlussboxen und die Einbauteile-Sätze jeweils identisch sind und die Anschlussboxen mittels Einbauteilen aus den Einbauteile-Sätzen voneinander verschieden individualisiert werden.

## Claims

1. An fiber-optic connection box comprising
a housing (1, 2) and
an installation-part set (15) of non-mounted installation parts for the connection box,
which set comprises, as installation parts, coupling devices (18, 19, 24), namely couplers or coupler holders,
wherein the coupling devices (18, 19, 24) of the set (15) can be selectively fastened in the housing (1, 2) in terms of number and position,
**characterized in that** the installation-part set (15) is realized as at least one one-piece, preferably injection-molded combination part with a plurality of interconnected installation parts, which installation parts are separable from the combination part.

2. Connection box according to claim 1, wherein the coupling devices (18, 19, 24) are fastenable in different routing directions of the respective patch points.

3. Connection box according to claim 1 or 2, wherein the combination part is fastenable in the housing.

4. Connection box according to one of the preceding claims, wherein the installation-part set (15), preferably the combination part, further comprises a tool (21) for dismounting plug connectors, a clamping part (28) for fiber optic cables, and/or a lock plate (22) for the housing (1, 2).

5. Connection box according to one of the preceding claims, which comprises an inner mounting plate (10) which is held therein so as to be foldable relative to the housing (1, 2), to which mounting plate (10) the combination part is fastenable.

6. Connection box according to claim 5, wherein the mounting plate (10) is releasably held in the housing (1, 2) and the combination part is fastenable in the housing (1, 2) in place of the mounting plate (10).

7. Connection box according to one of the preceding claims, comprising a needle (8) as a manipulation aid, which needle (8) is formed on a part of the connection box and is separable therefrom for use.

8. Connection box according to one of the preceding claims, comprising a connection region for splice point holders (8) and/or patch points and a base part (5) below the connection region, in which base part (5) an excess-length storage region (35) for up to at least six fiber optic cables with a thickness of in each case at least 0.5 mm is provided.

9. Connection box according to claim 8, comprising a receiving device (38) for filters and/or splinters in the base part (5) and/or comprising recesses for unused plug connection elements in the base part (5).

10. Connection box according to claim 8 or 9, comprising an excess-length storage region (35) for strand cables with a thickness of at least 0.8 mm outside the base part (5) and between the base part (5) and the housing (1, 2).

11. Connection box according to one of the preceding claims, which is mirror-symmetrical with respect to a central plane in terms of the mounting possibilities for the installation parts from the set (15) and an entry position of a fiber-optic cable strand.

12. Method for individualizing a fiber-optic connection box, wherein a connection box according to one of the preceding claims is stored as one in a plurality of identical connection boxes and is then individualized by selecting installation parts from the installation-part set (15) of the connection box and mounting these selected installation parts in the housing (1, 2).

13. Method according to claim 12, wherein a plurality of connection boxes and installation-part sets (15) are produced, then transported to a customer and then the installation-part sets (15) are stored in the plurality of connection boxes.

14. Use of a plurality of connection boxes according to one of claims 1-11, wherein the connection boxes and the installation-part sets are in each case identical and the connection boxes are individualized differently from one another by means of installation parts from the installation-part sets.

## Revendications

1. Boîtier de connexion à fibres optiques comprenant
un boîtier (1, 2) et
un ensemble (15) de composants d'installation non assemblés pour le boîtier de connexion,
lequel ensemble comprend, en tant que composants d'installation, des dispositifs de couplage (18, 19, 24), à savoir des coupleurs ou des supports de coupleur,
dans lequel les dispositifs de couplage (18, 19, 24) de l'ensemble (15) peuvent être fixés sélectivement dans le boîtier (1, 2) en termes de nombre et de position,
**caractérisé en ce que** l'ensemble (15) de composants d'installation est mis en oeuvre sous la forme d'au moins une partie de combinaison d'une seule pièce, de préférence moulée par injection, avec une pluralité de composants d'installation connectés, lesquels composants d'installation peuvent être séparés de la partie de combinaison.

2. Boîtier de connexion selon la revendication 1, dans lequel les dispositifs de couplage (18, 19, 24) peuvent être fixés dans différentes directions d'acheminement des points de raccordement respectifs.

3. Boîtier de connexion selon la revendication 1 ou 2, dans lequel la partie de combinaison peut être fixée dans le boîtier.

4. Boîtier de connexion selon l'une quelconque des revendications précédentes, dans lequel l'ensemble (15) de composants d'installation, de préférence la partie de combinaison, comprend en outre un outil (21) pour le désassemblage de connecteurs enfichables, une partie de serrage (28) pour des câbles à fibres optiques, et/ou une plaque de verrouillage (22) pour le boîtier (1, 2).

5. Boîtier de connexion selon l'une quelconque des revendications précédentes, qui comprend une plaque de montage intérieure (10) maintenue dans celui-ci et pliable par rapport au boîtier (1, 2), à laquelle plaque de montage (10) la partie de combinaison peut être fixée.

6. Boîtier de connexion selon la revendication 5, dans lequel la plaque de montage (10) est maintenue de manière amovible dans le boîtier (1, 2) et la partie de combinaison peut être fixée dans le boîtier (1, 2) à la place de la plaque de montage (10).

7. Boîtier de connexion selon l'une quelconque des revendications précédentes, comprenant une aiguille (8) en tant qu'aide à la manipulation, laquelle aiguille (8) est formée sur une partie du boîtier de connexion et peut être retirée de celui-ci pour l'utilisation.

8. Boîtier de connexion selon l'une quelconque des revendications précédentes, comprenant une région de connexion pour des supports de points d'épissure (8) et/ou des points de raccordement et une partie de base (5) en dessous de la région de connexion, dans laquelle partie de base (5) un support de longueur excessive (35) pour jusqu'à au moins six câbles à fibres optiques avec une épaisseur d'au moins 0,5 mm chacun est prévu.

9. Boîtier de connexion selon la revendication 8, comprenant un dispositif de réception (38) pour des filtres et/ou des séparateurs dans la partie de base (5) et/ou comprenant des évidements pour des éléments de connexion enfichables non utilisés dans la partie de base (5).

10. Boîtier de connexion selon la revendication 8 ou 9, comprenant une région de stockage de longueur excessive (35) pour des câbles à brins avec une épaisseur d'au moins 0,8 mm à l'extérieur de la partie de base (5) et entre la partie de base (5) et le boîtier (1, 2).

11. Boîtier de connexion selon l'une quelconque des revendications précédentes, qui est symétrique par rapport à un plan central en termes des options d'assemblage pour les composants d'installation de l'ensemble (15) et d'une position d'entrée d'un brin de câble à fibres optiques.

12. Procédé pour individualiser un boîtier de connexion à fibres optiques, dans lequel un boîtier de connexion selon l'une quelconque des revendications précédentes est stocké comme un dans une pluralité de boîtiers de connexion identiques et est ensuite individualisé en sélectionnant des composants d'installation de l'ensemble (15) de composants d'installation du boîtier de connexion et en assemblant ces composants d'installation sélectionnés dans le boîtier (1, 2).

13. Procédé selon la revendication 12, dans lequel une pluralité de boîtiers de connexion et les ensembles (15) de composants d'installation sont produits, puis transportés à un client, et ensuite les ensembles (15) de composants d'installation sont stockés dans la pluralité de boîtiers de connexion.

14. Utilisation d'une pluralité de boîtiers de connexion selon l'une quelconque des revendications 1 à 11, dans laquelle les boîtiers de connexion et les ensembles de composants d'installation sont chacun identiques et les boîtiers de connexion sont individualisés différemment les uns des autres au moyen de composants d'installation des ensembles de composants d'installation.
